# EUROPÄISCHE PATENTSCHRIFT

(11) **EP 0 963 513 B1**
(45) Veröffentlichungstag und Bekanntmachung des Hinweises auf die Patenterteilung: **13.11.2002**
(21) Anmeldenummer: 98921383.0
(22) Anmeldetag: 10.02.1998
(51) Int. Cl.: F02D 41/34, F01L 1/46

(54) **VERFAHREN UND ANORDNUNG ZUR ÜBERWACHUNG EINES ENDLOSTRIEBES EINER BRENNKRAFTMASCHINE**
PROCESS AND DEVICE FOR MONITORING AN ENDLESS DRIVING BELT OF AN INTERNAL COMBUSTION ENGINE
PROCEDE ET DISPOSITIF POUR SURVEILLER LA COURROIE SANS FIN DE TRANSMISSION D'UN MOTEUR A COMBUSTION INTERNE

(30) Priorität: 12.02.1997 DE 19705257
(43) Veröffentlichungstag der Anmeldung: 15.12.1999
(73) Patentinhaber: Volkswagen Aktiengesellschaft, 38436 Wolfsburg (DE)
(72) Erfinder: SCHER, Uwe, D-38162 Cremlingen (DE); KAHRSTEDT, Jörn, D-12169 Berlin (DE)
(86) Internationale Anmeldenummer: EP9800996
(87) Internationale Veröffentlichungsnummer: WO98035148

(56) Entgegenhaltungen:
- DE-C- 19 503 457
- FR-A- 2 670 831
- US-A- 5 357 932
- US-A- 5 548 995
- US-A- 5 584 274

## Beschreibung

Die Erfindung betrifft eine Verfahren sowie eine Anordnung zur Überwachung eines Endlostriebes einer Brennkraftmaschine gemäß dem Oberbegriff des Patentanspruches 1.

Ein gattungsgemäßes Verfahren ist aus DE 195 03 457 C1 bekannt. Zur Überwachung des Verschleißes einer Steuerkette eines Kraftfahrzeugmotors wird vorgeschlagen, an einem kurbelwellenseitigen Kettenrad sowie einem nockenwellenseitigen Kettenrad berührungslos Signale bezüglich der relativen Phasenlage der beiden Kettenräder zueinander aufzunehmen, diese aktuell im Betrieb der Brennkraftmaschine ermittelte Ist-Phasenlage mit einem vorgegebenen Sollwert zu vergleichen und bei einer vorliegenden Abweichung ein auf eine unzulässige Längung der Kette hinweisendes Signal auszugeben.
Mit diesem Verfahren soll rechtzeitig ein unzulässig starker Verschleiß der Steuerkette hinsichtlich einer gleichmäßigen Längung der Kette und einer Längung infolge eines Einzelkettengliedschadens erkannt werden. Eine vorsorgliche und eventuell unnötige Kettenerneuerung wird vermieden, vielmehr soll die Steuerkette nur dann, wenn es wirklich erforderlich ist, gewechselt werden. Auswirkungen auf den Motorbetrieb, die sich infolge einer Längung der Steuerkette ergeben können, sind nicht behandelt.

Unabhängig von der Längung einer solchen Steuerkette ist es bekannt, eine rechnergesteuerte Bestimmung der in einzelne Zylinder einer Brennkraftmaschine eingespritzten Brennstoffmenge bei Brennkraftmaschinen vorzunehmen, die über eine Einrichtung zur gesteuerten Veränderung der relativen Phasenlage einer Nockenwelle gegenüber der sie antreibenden Kurbelwelle verfügt, beispielsweise aus DE 44 12 020 C2.
Eine Nockenwelleneinstellvorrichtung und ein Verfahren zum Erfassen der Winkelposition einer verstellbaren Nockenwelle ist in DE 44 40 656 A1 beschrieben, wobei während des Anlassens des Motors der erste zündende Zylinder einer vorgegebenen Zylinderzündfolge ermittelt wird, die Winkelposition der Nockenwelle erfaßt und berechnet wird und diese Informationen zur Verwendung durch eine Motorsteuerung gespeichert bzw. übertragen werden um Einspritz- und Kraftstoffregelparameter zu bestimmen.

Der Erfindung liegt die Aufgabe zugrunde, ein gattungsgemäßes Verfahren sowie eine Anordnung anzugeben, welche sich infolge einer Längung eines Endlostriebes einer Brennkraftmaschine einstellende, unerwünschte Auswirkungen auf den Motorbetrieb weitgehend vermeidet.

Die Lösung dieser Aufgabe gelingt mit einem Verfahren gemäß Patentanspruch 1, welches im wesentlichen dadurch gekennzeichnet ist, daß ausgehend von einem ungelängten Zustand des Endlostriebes in einem der Brennkraftmaschine zugeordneten Steuerrechner aus einem Kennfeld eines Funktionsmodules Datenwerte für eine Kraftstoffzumeßeinrichtung ermittelt werden, die zumindest von einem der ermittelten Sensorsignale abhängig sind, wobei diese Datenwerte über die Kennfeldabhängigkeit eine Soll-Beziehung zu Gaswechselsteuereinrichtungen der Brennkraftmaschine aufweisen. Dieses führt dazu, daß zu einem kennfeldabhängigen Betriebspunkt der Brennkraftmaschine die Kraftstoffzumeßeinrichtung gemäß der Datenwerte eine Sollkraftstoffmenge abgebend betätigt wird.
Weiterhin wird in einem weiteren Funktionsmodul des Steuerrechners in Abhängigkeit von dem Phasenlage-Signal ein Korrekturwert für diese Datenwerte bestimmt, diesen Datenwerten überlagert und somit ein korrigierter Wert geformt. Dieses erfolgt derartig, daß die imaginäre Kraftstoffmenge, welche sich bei vorliegender Längung und Beibehaltung der Soll-Datenwerte einstellen würde und eine Abweichung von dem gewünschten Motorlauf zur Folge hätte, auf den Wert der für einen optimalen Motorlauf ausgelegten Soll-Kraftstoffmenge korrigiert wird.
Das erfindungsgemäße Verfahren beseitigt somit die Fehlanpassung, die sich infolge der Längung des Endlostriebes in der Beziehung zwischen Kraftstoffeinspritzung und Gaswechselsteuerung ergibt.
Das Verfahren ist sowohl bei fremd- wie auch bei selbstgezündeten Brennkraftmaschinen anwendbar und weiterhin unabhängig von der Art des Endlostriebes.
Besonders vorteilhaft ist das Verfahren bei einer selbstzündenden, direkteinspritzenden Brennkraftmaschine anwendbar, insbesondere bei einer solchen Brennkraftmaschine, die mit Pumpe-Düse-Elementen ausgestattet sind, welche von einer Nockenwelle betätigt werden, die gleichfalls die Gaswechselsteuereinrichtungen betätigt.

Das Verfahren ist auch vorteilhaft anwendbar, wenn eine allen Zylindern der Brennkraftmaschine gemeinsame Einspritzpumpe mittels des Endlostriebes betätigt wird, d.h. mindestens drei Räder überlaufen werden.

Eine Anordnung zur Überwachung eines Endlostriebes einer Brennkraftmaschine mittels eines Verfahrens nach Patentanspruch 1 ist in Patentanspruch 5 angegeben.

Vorteilhafte Ausgestaltungen der Erfindung sind in den abhängigen Ansprüchen angegeben. So kann bevorzugt vorgesehen sein, daß die Datenwerte in der Form von Werten für den Beginn und für die zeitliche Dauer der Kraftstoffeinspritzung ermittelt werden. Besonders einfach läßt sich das Verfahren durchführen, wenn unter Beibehaltung der Datenwerte für den Beginn der Kraftstoffeinspritzung lediglich Korrekturwerte für die zeitliche Dauer der Kraftstoffeinspritzung gebildet werden.
Weiterhin kann besonders bevorzugt vorgesehen sein, daß die imaginäre Kraftstoffmenge in dem Steuerrechner mit Hilfe einer Rechenvorschrift bestimmt wird und mit Hilfe der sich aus dem Vergleich mit der Sollkraftstoffmenge errechneten Differenzmenge ein Korrekturwert für diese zeitliche Dauer rechnerisch bestimmt wird. Somit wird vorteilhafterweise für das Verfahren lediglich auf vorhandene Signale zurückgegriffen aus denen die notwendigen Korrekturen errechnet werden, ein Auslesen von korrigierten Datenwerten aus Kennfeldern, welche entsprechend aufwendig zu ermitteln sind, ist somit entbehrlich.

Weitere Vorteile und Merkmale der Erfindung ergeben sich aus dem nachfolgend anhand einer Zeichnung näher erläuterten Ausführungsbeispiel. Es zeigen:

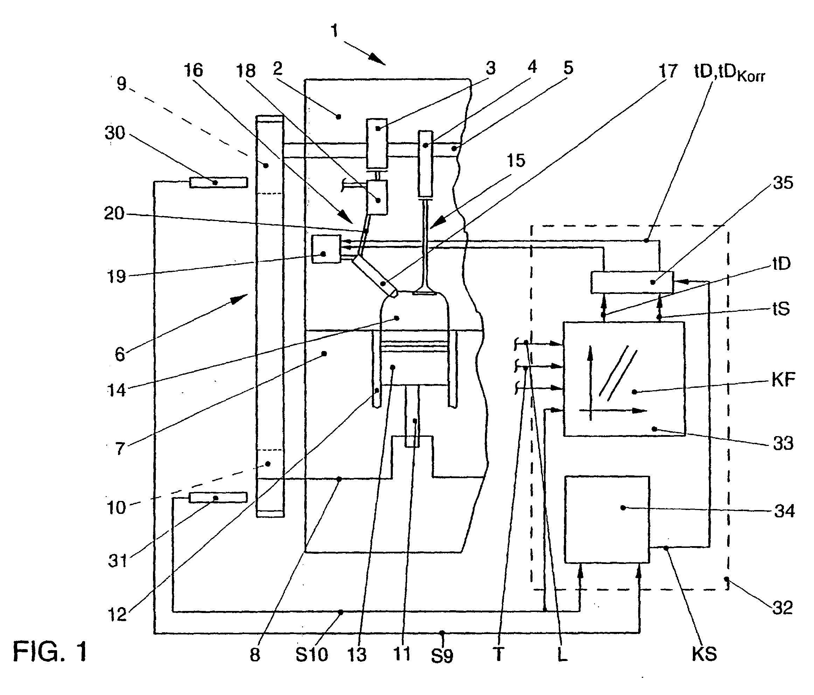

Figur 1 ein schematisches Systembild und
Figur 2 ein schematisches Diagramm zur Darstellung der zeitlichen Abläufe.

Eine Brennkraftmaschine 1 weist in einem Zylinderkopf 2 eine mit verschiedenen Nocken 3, 4 bestückte, drehbar gelagerte Welle 5 auf, welche über einen Endlostrieb 6 von einer in einem Kurbelgehäuse 7 drehbar gelagerten Kurbelwelle 8 angetrieben wird.

Der hier beispielsweise als Riementrieb ausgebildete Endlostrieb 6 läuft über den Wellen 5, 8 zugeordnete Räder 9, 10.

Die Kurbelwelle 8 ist mittels Pleueln 11 mit in Zylindern 12 auf- und abwärts bewegbaren Kolben 13 verbunden.

Oberhalb des Zylinders 12 ist ein Brennraum 14 ausgebildet, welchem als Hubventile ausgebildete Gaswechselsteuereinrichtungen 15 sowie als Teil einer Kraftstoffzumeßeinrichtung 16 ausgebildete Einspritzdüsen 17 für Kraftstoff zugeordnet sind.
Die Kraftstoffzumeßeinrichtung 16 weist weiterhin eine Pumpe 18 sowie ein Elektromagnetventil 19 und eine Leitung 20 auf, welche den von der Pumpe 18 geförderten und verdichteten Kraftstoff zur Einspritzdüse 17 leitet.

Dem Rad 9 und dem Rad 10 ist jeweils ein Sensor 30 bzw. 31 zur Gewinnung von Signalen S9 bzw. S10 zugeordnet, welche einem insgesamt mit 32 bezeichneten Steuerrechner, welcher mehrere noch zu erläuternde Funktionsmodule aufweist, zugeführt werden.
In einem Funktionsmodul 33 werden anhand von mehreren zugeführten Parametern, wie beispielsweise dem Signal S10, einem Lastsignal L, einem Temperatursingal T usw. Datenwerte tS und tD aus einem Kennfeld KF bestimmt. Diese legen in der Form des Wertes tS den Startzeitpunkt, d. h. den Beginn einer aktuellen Kraftstoffeinspritzung mit Hilfe der Einspritzdüse 17 fest, während der Wert tD die Zeitspanne, d. h. die zeitliche Dauer dieser aktuellen Kraftstoffeinspritzung vorgibt.

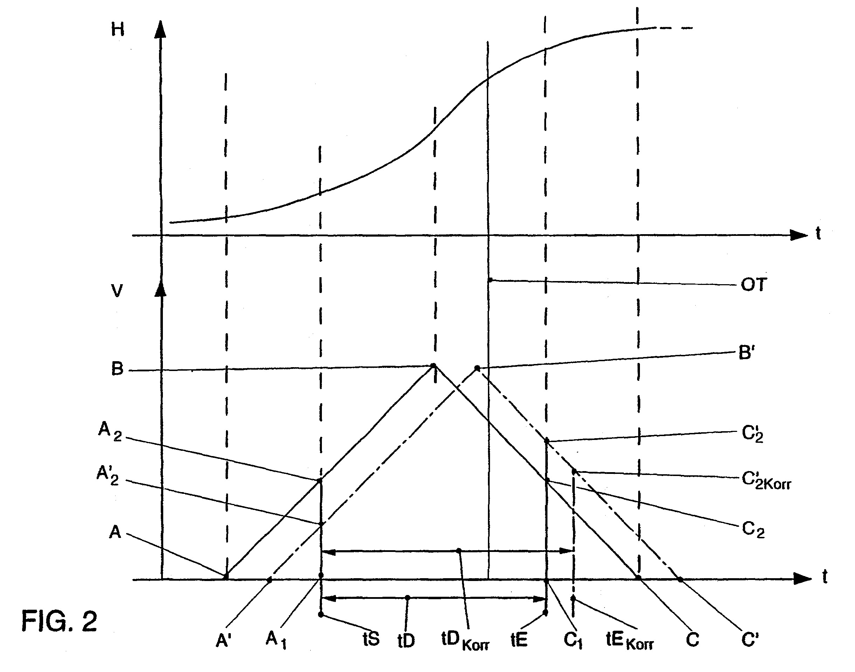

Im Betrieb der Brennkraftmaschine 1 weisen diese Datenwerte tS, tD eine kennfeldabhängige Soll-Beziehung zu den Gaswechselsteuereinrichtungen 15 sowie zur Kraftstoffzumeßeinrichtung 16 auf, da die Welle 5 mit ihren Nocken 3 bzw. 4 über den Endlostrieb 6 starr an den Lauf der Kurbelwelle 8 gekoppelt ist, welche wiederum durch ihre Rotation die diesbezügliche Soll-Beziehung zum Kolben 13 und seiner Bewegung festlegt.
Die zeitliche Abfolge dieser Soll-Beziehung wird anhand von Figur 2 näher erläutert. Diese zeigt in ihrem oberen Abschnitt den Hubverlauf H über der Zeit t, an deren Stelle auch der Kurbelwinkel aufgetragen sein könnte, des Nockens 3. Im darunter liegenden Bereich ist die zu diesem auch als Fördernocken zu bezeichnenden Nocken 3 der Geschwindigkeitsverlauf V über der Zeit t aufgetragen. Erkennbar ist ein insgesamt dreieckiger Förderverlauf, gekennzeichnet durch die Eckpunkte A, B und C. Unter anderem in Abhängigkeit des Signales S10 wird aus einem bestimmten Kennfeldbereich ein Datenwertepaar tS und tD aus dem Funktionsmodul 33 ausgelesen und dem Magnetventil 19 zugeführt. Zum Zeitpunkt tS öffnet das Elektromagnetventil 19, so daß die Kraftstoffeinspritzung beginnen kann, wobei die abgegebene Kraftstoffmenge durch die zeitliche Dauer tD festgelegt ist. Das heißt, das Ende der Kraftstoffeinspritzung zu einem Zeitpunkt tE ist durch den Beginn zum Zeitpunkt tS sowie die Dauer tD festgelegt. Die eingespritzte Menge an Kraftstoff MKS wird somit durch den Kurvenzug A₁, A₂, B, C₂, C₁, bestimmt, d. h. sie entspricht der durch diesen Kurvenzug festgelegten Fläche.
Eine senkrechte Linie OT in Figur 2 repräsentiert den Zeitpunkt des oberen Totpunktes des Kolbens 13 in einem bestimmten Betriebsbereich der Brennkraftmaschine 1.

Einem weiteren Funktionsmodul 34 werden während des Brennkraftmaschinenlaufes ständig die Signale S9 und S10 zugeführt. In diesem Funktionsmodul 34 sind Sollwerte für die relativen Phasenlage PHI der beiden Wellen 5 und 8 zueinander abgelegt. Kommt es während des Betriebes der Brennkraftmaschine 1 zu einer unerwünschten Längung des Endlostriebes 7, so verändert sich infolge dessen die relative Lage dieser beiden Wellen 5, 8 zueinander. Dieses hat eine Verschiebung des Dreieckes ABC in Richtung "spät" zur Folge, so daß sich gemäß Figur 2 ein Geschwindigkeitsverlauf entlang des Kurvenzuges A', B', C' einstellt.
Es ist leicht erkennbar, daß sich aufgrund dieser Verschiebung eine unerwünschte Änderung der Kraftstoffmenge MKS bei ansonsten unveränderten Datenwerten tS und tD einstellen würde. Diese imaginäre Kraftstoffmenge MKS' würde durch die Fläche unterhalb des Kurvenzuges A₁, A'₂, B', C'₂und C₁ repräsentiert. Diese imaginäre Kraftstoffmenge MKS' wäre aufgrund des asymmetrischen Kurvenzuges geringer als die vorgegebene Soll-Kraftstoffmenge MKS, d. h. es würde eine unerwünschte Fehlanpassung vorliegen.
Zur Vermeidung dieser Fehlanpassung vergleicht ein im Funktionsmodul 34 integrierter Komperator ständig die Signale S9 und S10 und gibt, bei Abweichung von den Sollwerten ein der aktuellen, relativen Phasenlage PHI entsprechendes Korrektursignal KS an ein weiteres Funktionsmodul 35 des Steuerrechners 32. Diesem Funktionsmodul 35 werden die aus dem Kennfeld KF des Funktionsmodules 33 ausgelesenen Datenwerte tS und tD zugeführt. Mit Hilfe einer dort abgelegten Rechenvorschrift wird die Sollkraftstoffmenge MKS aufgrund des Datenwertepaares tS, tD und des bekannten Verlaufes V über der Zeit T errechnet. Weiterhin wird in diesem Funktionsmodul 35 aufgrund des Korrektursignales KS die imaginäre Kraftstoffmenge MKS' berechnet, welche sich infolge der unerwünschten Längung unter Beibehaltung der Werte von tS und tD einstellen würde. Durch einen rechnerischen Vergleich von MKS und MKS' wird die Fehlmenge an Kraftstoff bestimmt und anschließend der Datenwert tD so mit einem Korrekturwert überlagert, daß sich eine korrigierte Dauer der Kraftstoffeinspritzung tDₖₒᵣᵣ einstellt, derart, daß unter Beibehaltung der Kraftstoffeinspritzung zum Zeitpunkt tS die Fehlmenge ausgeglichen wird.
Im vorliegenden Beispiel bedeutet die Verschiebung des Scheitelpunktes B in Richtung auf B' eine Verringerung der imaginären Kraftstoffmenge MKS' gegenüber der beabsichtigten Sollkraftstoffmenge MKS, so daß unter Beibehaltung des Datenwertes tS die korrigierte zeitliche Dauer tDₖₒᵣᵣ größer ist als tD. Infolge der Vergrößerung der Einspritzdauer ist der die korrekte Kraftstoffmenge MKS wiedergebende Kurvenzug zum Ende tEₖₒᵣᵣ der Kraftstoffeinspritzung durch die Eckpunkte C'₂ₖₒᵣᵣ und tDₖₒᵣᵣ gekennzeichnet.

In Abweichung von dem zuvor beschriebenen Ausführungsbeispiel kann selbstverständlich anstelle des Datenwertes tD der Beginn der Kraftstoffeinspritzung tS variiert werden, ebenfalls ist eine Kombination aus Korrektur von tS und tD denkbar.
Die zur besseren Verständlichkeit separat gezeichneten Funktionseinheiten Pumpe 18, Einspritzdüse 17, Elektromagnetventil 19 und Leitung 20 können in einer Pumpe-Düse-Baueinheit vereint sein.

Die in Figur 2 wiedergegebene Beziehung zwischen Kolben-OT und Einspritznocken ist, wie bereits zuvor ausgeführt, beispielhaft für einen bestimmten Betriebspunkt der Brennkraftmaschine 1. Kennfeldabhängig kann der Scheitelpunkt B zeitlich näher zum Kolben-OT bzw. nach diesem Zeitpunkt liegen. Die sich dann einstellende Kraftstoffmenge MKS wird im letzteren Falle ausschließlich durch eine Fläche unterhalb der abfallenden Flanke B, C bzw. B', C' bestimmt.

## Patentansprüche

1. Verfahren zur Überwachung eines Endlostriebes (6) einer Brennkraftmaschine (1), welcher zumindest über zwei Räder (9, 10) läuft, denen jeweils ein Sensor (30, 31) zur Gewinnung von Signalen (S9, S10) zugeordnet ist, aus welchen die relativen Phasenlage (PHI) der Räder (9, 10) zueinander ermittelt wird, wobei ein auf eine Längung des Endlostriebes (6) hinweisendes Signal (KS) erzeugt wird, wenn die aktuelle Ist-Phasenlage von einem Sollwert abweicht,
**dadurch gekennzeichnet,**
- **daß** der Brennkraftmaschine (1) ein Steuerrechner (32) zugeordnet ist, welcher in einem Funktionsmodul (33) aus einem Kennfeld (KF), Datenwerte (tS, tD) für eine Kraftstoffzumeßeinrichtung (16) in Abhängigkeit von unter anderem dem Sensorsignal (S10) ermittelt, wobei diese Datenwerte (tS, tD) eine kennfeldabhängige Sollbeziehung zu Gaswechselsteuereinrichtungen (15) der Brennkraftmaschine (1) aufweisen, derart, daß zu einem kennfeldabhängigen Betriebspunkt der Brennkraftmaschine (1) die Kraftstoffzumeßeinrichtung (16) gemäß der Datenwerte (tS, tD) eine Sollkraftstoffmenge (MKS) abgebend betätigt wird,
- **daß** in einem weiteren Funktionsmodul (34) in Abhängigkeit von den Sensorsignalen (S9, S10) ein Korrektursignal (KS) für die Datenwerte (tS, tD) bestimmt wird und die in dem einen Funktionsmodul (33) ermittelten Datenwerte (tS, tD) anschließend zu einem korrigierten Wert (tDₖₒᵣᵣ) geformt werden, derart, daß die sich infolge einer Längung des Endlostriebes (6) einstellende und von der Soll-Kraftstoffmenge (MKS) abweichende, imaginäre Kraftstoffmenge (MKS') auf den Wert der Sollkraftstoffmenge (MKS) korrigiert wird, wobei die Kraftstoffmenge mittels eines Nockenantriebs (3) gefördert wird, der vom Endlostrieb (6) angetrieben wird.

2. Verfahren nach Anspruch 1, **dadurch gekennzeichnet, daß** die Datenwerte (tS, tD) in Form von Werten (tS) für den Beginn und für die zeitliche Dauer (tD) der Kraftstoffeinspritzung ermittelt werden.

3. Verfahren nach Anspruch 1 oder 2, **dadurch gekennzeichnet, daß** in dem Steuerrechner (32) nur Korrekturwerte für die Datenwerte (tD) der zeitlichen Dauer der Einspritzung bestimmt werden.

4. Verfahren nach Anspruch 3, **dadurch gekennzeichnet, daß** in dem Steuerrechner (32) mit Hilfe einer Rechenvorschrift die imaginäre Kraftstoffmenge (MKS') voraus berechnet wird, die sich infolge der Längung bei Beibehaltung der Datenwerte (tS, tD) der Soll-Kraftstoffmenge (MKS) einstellen würde, diese mit der Soll-Kraftstoffmenge (MKS) verglichen wird und aus der Differenzmenge der aktuelle Korrekturwert für die zeitliche Dauer (tD) errechnet wird.

5. Verwendung einer Anordnung zur Überwachung eines Endlostriebes (6) einer Brennkraftmaschine (1) mittels eines Verfahrens nach Anspruch 1, **dadurch gekennzeichnet, daß** das eine Rad (10) einer Kurbelwelle (8) der Brennkraftmaschine (1) zugeordnet ist und das weitere Rad (9) einer mit voneinander verschiedenen Nocken (3, 4) bestückten Welle (5), welche von dem einen Rad (10) angetrieben die Gaswechselsteuereinrichtungen (15) und die Kraftstoffzumeßeinrichtungen (16) periodisch betätigt.

6. Verwendung einer Anordnung zur Überwachung eines Endlostriebes (6) einer Brennkraftmaschine (1) nach Anspruch 5, **dadurch gekennzeichnet, daß** die Kraftstoffzumeßeinrichtung (16) eine nockenbetätigte Pumpe (18) sowie eine Kraftstoffeinspritzdüse (17) aufweist, wobei in dem Strömungsweg zwischen Pumpe (18) und Düse (17) ein in Abhängigkeit von den Datenwerten (tS, tD, tDₖₒᵣᵣ) betätigtes Absperrorgan angeordnet ist.

## Claims

1. Method for monitoring an endless drive belt (6) of an internal combustion engine (1), which runs over at least two wheels (9, 10), which are each assigned a sensor (30, 31) for acquiring signals (S9, S10) from which the relative phase angle (PHI) of the wheels (9, 10) with respect to one another is determined, a signal (KS) which indicates a lengthening of the endless drive belt (6) being generated if the current actual phase angle differs from a set point value,
**characterized**
- **in that** a control computer (32) which determines, from a characteristic diagram (KF) in a function model (33), data values (tS, tD) for a fuel metering device (16) as a function of, inter alia, the sensor signal (S10), is assigned to the internal combustion engine (1), these data values (tS, tD) having a characteristic-diagram-dependent set point relationship to charge cycle control devices (15) of the internal combustion engine (1) in such a way that, at a characteristic-diagram-dependent operating point of the internal combustion engine (1), the fuel metering device (16) is activated in accordance with the data values (tS, tD) so as to output a set point fuel quantity (MKS),
- **in that**, in a further function module (34), a correction signal (KS) for the data values (tS, tD) is determined as a function of the sensor signals (S9, S10), and the data values (tS, tD) determined in the one function module (33) are then shaped to form a corrected value (tD_{corr}) in such a way that the imaginary fuel quantity (MKS') which is set owing to a lengthening of the endless drive belt (6) and which differs from the set point fuel quantity (MKS) is corrected to the value of the set point fuel quantity (MKS), the fuel quantity being fed by means of a cam drive (3) which is driven by the endless drive belt (6).

2. Method according to Claim 1, **characterized in that** the data values (tS, tD) are determined in the form of values (tS) for the start and for the chronological duration (tD) of the fuel injection.

3. Method according to Claim 1 or 2, **characterized in that** only correction values for the data values (tD) of the chronological duration of the injection are determined in the control computer (32).

4. Method according to Claim 3, **characterized in that** the imaginary fuel quantity (MKS') which would be set owing to the lengthening while maintaining the data values (tS, tD) of the set point fuel quantity (MKS) is calculated in advance in the control computer (32) using a computational rule, said imaginary fuel quantity (MKS') is compared with the set point fuel quantity (MKS) and the current correction value for the chronological duration (tD) is calculated from the difference quantity.

5. Use of an arrangement for monitoring an endless drive belt (6) of an internal combustion engine (1) by means of a method according to Claim 1, **characterized in that** the one wheel (10) is assigned to a crankshaft (8) of the internal combustion engine (1), and the other wheel (9) is assigned to a shaft (5) which is equipped with cams (3, 4) which differ from one another, said shaft (5) periodically activating, driven by the one wheel (10), the charge cycle control device (15) and the fuel metering devices (16).

6. Use of an arrangement for monitoring an endless drive belt (6) of an internal combustion engine (1) according to Claim 5, **characterized in that** the fuel metering device (16) has a cam-activated pump (18) and a fuel injection nozzle (17), a shut-off element which is activated as a function of the data values (tS, tD, tD_{corr}) being arranged in the flow path between the pump (18) and nozzle (17).

## Revendications

1. Procédé de surveillance d'une courroie de transmission sans fin (6) d'un moteur à combustion interne (1), qui tourne au moins autour de deux roues (9, 10), auxquelles est affecté, respectivement, un capteur (30, 31) pour obtenir des signaux (S9, S10), qui permettent de déterminer la position de phase relative (PHI) des roues (9, 10) l'une par rapport à l'autre, en produisant un signal (KS) indiquant un allongement de la courroie de transmission sans fin (6) lorsque la position de phase réelle courante s'écarte d'une valeur théorique,
**caractérisé en ce que** :
- au moteur à combustion interne (1) est affecté un calculateur de commande (32) qui détermine, dans un module fonctionnel (33) à partir d'un diagramme caractéristique (KF), des valeurs de données (tS, tD) pour un dispositif de dosage de carburant (16) en fonction, entre autres, du signal (S10) du capteur, ces valeurs de données (tS, tD) présentant une relation théorique, qui dépend du diagramme caractéristique, avec des dispositifs de commande du changement des gaz (15) du moteur à combustion interne (1) de sorte qu'à un point de fonctionnement dynamique du moteur à combustion interne (1) dépendant du diagramme caractéristique, le dispositif de dosage de carburant (16) soit commandé selon les valeurs de données (tS, tD) en délivrant une quantité de carburant théorique (MKS), et
- que, dans un autre module fonctionnel (34), un signal de correction (KS) pour les valeurs de données (tS, tD) est déterminé en fonction des signaux (S9, S10) du capteur et les valeurs de données (tS, tD) déterminées dans le premier module fonctionnel (33) sont ensuite converties en une valeur corrigée (tD_{corr}) de sorte que la quantité de carburant imaginaire (MKS') s'établissant à la suite d'un allongement de la courroie de transmission sans fin (6) et s'écartant de la quantité de carburant théorique (MKS) soit corrigée en la valeur de la quantité de carburant théorique (MKS), la quantité de carburant étant refoulée au moyen d'une commande à cames (3) qui est entraînée par la courroie de transmission sans fin (6).

2. Procédé selon la revendication 1, **caractérisé en ce que** les valeurs de données (tS, tD) sont déterminées sous la forme de valeurs (tS) pour le début et pour la durée temporelle (tD) de l'injection de carburant.

3. Procédé selon la revendication 1 ou 2, **caractérisé en ce qu'**on ne détermine dans le calculateur de commande (32) que des valeurs de correction pour les valeurs de données (tD) de la durée temporelle de l'injection.

4. Procédé selon la revendication 3, **caractérisé en ce qu'**on calcule préalablement dans le calculateur de commande (32), à l'aide d'une instruction de calcul, la quantité de carburant imaginaire (MKS') qui s'établirait à la suite de l'allongement en conservant les valeurs de données (tS, tD) de la quantité de carburant théorique (MKS), on la compare à la quantité de carburant théorique (MKS) et on calcule, à partir de la différence de quantité, la valeur de correction courante pour la durée temporelle (tD).

5. Utilisation d'un aménagement de surveillance d'une courroie de transmission sans fin (6) d'un moteur à combustion interne (1) au moyen d'un procédé selon la revendication 1, **caractérisé en ce que** la première roue (10) est affectée à un vilebrequin (8) du moteur à combustion interne (1) et l'autre roue (9) à un arbre (5) équipé de cames (3, 4) différentes l'une de l'autre, qui est entraîné par la première roue (10) et actionne périodiquement les dispositifs de commande du changement des gaz (15) et les dispositifs de dosage de carburant (16).

6. Utilisation d'un aménagement de surveillance d'une courroie de transmission sans fin (6) d'un moteur à combustion interne (1) selon la revendication 5, **caractérisé en ce que** le dispositif de dosage de carburant (16) présente une pompe (18) actionnée par came ainsi qu'un injecteur de carburant (17), un organe d'obturation actionné en fonction des valeurs de données (tS, tD, tD_{corr}) étant disposé dans le trajet d'écoulement entre la pompe (18) et l'injecteur (17).
